# DEMANDE DE BREVET EUROPEEN

(11) **EP 2 600 319 A1**
(43) Date de publication de la demande: **05.06.2013**
(21) Numéro de dépôt: 11306576.7
(22) Date de dépôt: 29.11.2011
(51) Int. Cl.: G07C 9/00, H04B 13/00

(54) **Système d'appairage entre un terminal et un élément de type eGo porté au poignet ou à la main d'un utilisateur et procédé correspondant**

(71) Demandeur: Gemalto SA, 92190 Meudon (FR)
(72) Inventeur: Rhelimi, Alain, 13705 La Ciotat cedex (FR)

(57) **Abrégé**

L'invention concerne notamment un système d'appairage entre un terminal (14) et un élément de type eGo (10) porté au poignet (12) ou à la main d'un utilisateur, l'élément de type eGo (10) comportant un élément de sécurité destiné à communiquer avec le terminal (14).

Selon l'invention :
- l'élément de type eGo (10) renferme un accéléromètre (15, 16) ;
- le terminal comprend des moyens d'enregistrement des mouvements effectués par l'élément de type eGo ;
- le système comporte des moyens de comparaison de la signature de l'accéléromètre (15, 16) et de celles des moyens d'enregistrement du terminal pour autoriser l'appairage du terminal (14) avec l'élément de sécurité si les signatures sont semblables.

## Description

Le domaine de l'invention est celui des télécommunications et notamment de l'authentification d'un porteur d'un élément intelligent de type eGo.

Plus précisément, la présente invention concerne un système et un procédé d'appairage entre d'une part un terminal et un élément de type eGo porté au poignet ou à la main d'un utilisateur.

Dans un premier système d'appairage, on se propose d'appairer par exemple un téléphone mobile ou un PDA (Personal Digital Assistant), et d'autre part un élément sécurisé déporté.

Le terminal de télécommunication est préférentiellement un téléphone mobile. Habituellement, un téléphone mobile renferme un élément sécurisé, tel qu'une carte Sim, Usim ou un UICC, voire un e-UICC (embedded UICC, càd une puce solidaire du terminal mobile (par exemple soudée dans ce terminal mobile) faisant office d'UICC), destiné à coopérer avec le terminal. L'élément sécurisé comporte des éléments (clés, répertoires, logiciels, fichiers,...) permettant à l'utilisateur du terminal de s'identifier auprès d'un réseau de télécommunications, généralement cellulaire, et d'établir des communications (voix, données,...). Un élément sécurisé de ce type répond aux standards de l'ETSI.

On entend par élément sécurisé déporté un élément sécurisé qui n'est pas présent ou physiquement relié au terminal, mais qui communique par voie radio avec ce terminal. Dans un mode de réalisation particulier, l'élément sécurisé peut par exemple être incorporé dans un appareil porté par l'utilisateur du terminal et communiquer par Bluetooth, Wifi ou une technologie basée sur le standard IEEE 802.15.4 avec le terminal. On remplace ainsi un système classique de terminal mobile comportant une carte UICC par un terminal ne comportant pas de carte UICC mais communiquant avec cette carte (ou un e-UICC) distante de quelques dizaines de centimètres à quelques mètres, voire quelques dizaines de mètres.

L'avantage de cette solution est que le terminal ne comporte plus d'identifiant de l'abonné et qu'il peut être prêté à toute personne désireuse de s'en servir : la communication avec le réseau ne sera pas facturée au détenteur de l'appareil mais à son utilisateur (en supposant bien sûr que l'utilisateur détient également un élément sécurisé déporté, sans quoi l'établissement d'une communication ne sera pas possible). De plus, comme toutes les données personnelles précieuses à l'utilisateur, comme son agenda, son répertoire téléphonique, ses photos,... sont compris dans son élément sécurisé qu'il détient avec lui, un vol ou une perte de son terminal ne représente qu'un préjudice mineur, comparé à la perte ou du vol de son élément sécurisé déporté comprenant ses données personnelles, ses droits d'accès à des services, voire de ses moyens de paiement.

On connaît par ailleurs un système de transmission ingénieux appelé eGo. Un tel système est décrit sur le site http://www.ego-project.eu et dans le brevet EP-1.695.296.

Un système eGo est composé de deux éléments : un premier élément est compris dans un élément à commander. Il peut s'agir d'une souris d'un ordinateur, d'un téléphone portable, d'une porte de maison ou de voiture, etc... Le deuxième élément est porté par l'utilisateur du premier élément : il s'agit d'un élément permettant d'identifier ou d'authentifier le porteur du deuxième par le premier élément. Le deuxième élément est en contact physique avec l'utilisateur, par exemple porté à sa ceinture, autour du cou (badge, collier), dans sa montre, l'essentiel étant qu'une communication de type BCC (« Body-Coupled Communication » en anglais, Communication par le Corps) puisse s'établir entre les deux éléments.

Le principe de fonctionnement est le suivant : le porteur du deuxième élément s'authentifie auprès de ce deuxième élément, par exemple en entrant un code dans l'appareil qui le comprend ou en faisant reconnaître son empreinte digitale. Une fois authentifié, le porteur du deuxième élément entre en contact physique avec l'élément à commander (il touche la souris reliée à l'ordinateur, prend son téléphone portable en main, touche la poignée de la porte de son domicile ou de sa voiture) et une communication est établie entre les premier et deuxième éléments à la surface de la peau du porteur. Si le second élément reconnaît le premier (un appairage primaire a été réalisé préalablement entre les deux éléments) alors le second s'active et tente d'établir une communication sans fil avec le premier élément.

Cette communication BCC est ensuite interrompue pour qu'une communication sans fil, par exemple en mode UWB (Ultra Wide Band par exemple décrit dans le standard IEEE 802.15.4a), soit établie entre les deux éléments. L'ordinateur ou le téléphone portable passe d'un état bloqué à un état débloqué (sans que l'utilisateur n'ait à entrer son mot de passe ou un code PIN), la serrure de son domicile ou de sa voiture se débloque sans qu'il n'ait à utiliser de clé. Pendant cette communication UWB, tout appareil qui a authentifié le porteur communique par ondes radio bidirectionnelles avec le deuxième élément. Ceci permet au porteur de ne pas devoir rester en contact physique avec l'élément à commander (la souris, le téléphone ou la poignée de porte). Le porteur peut rester à proximité de l'élément à commander (jusqu'à environ 20 mètres) sans que celui-ci ne repasse à son état initial (blocage de l'ordinateur ou du téléphone, verrouillage de la serrure). Si le porteur s'éloigne trop de l'élément à commander, la communication UWB est coupée et l'ordinateur ou le téléphone se bloque automatiquement et la porte se verrouille.

Un tel système est notamment décrit dans la demande de brevet européen n°11305862.2 ayant pour titre : "Système de transmission de données entre un terminal de télécommunication et un élément sécurisé déporté", déposée le 05.07.2011.

Cette demande de brevet revendique un système de transmission de données entre un terminal de télécommunication et un élément sécurisé déporté dans lequel le système comprend une interface apte à établir une communication de type UWB entre le terminal et l'élément sécurisé.

Selon cette demande de brevet, l'interface peut se présenter sous différentes formes, par exemple :
- comprendre un élément flexible doté d'un connecteur destiné à entrer en contact électrique avec des contacts électriques correspondants du terminal, ce connecteur étant électriquement relié à un élément de communication relié à une antenne de type UWB ;
- comprendre un élément faisant office de proxy entre le terminal et un élément de communication relié à une antenne de type UWB, cet élément faisant office de proxy étant en contact avec des contacts électriques du terminal et comprenant des moyens de communication courte distance avec l'élément de communication, l'élément de communication étant en contact mécanique avec la coque du terminal ;
- comprendre un élément faisant office de proxy entre le terminal et un élément de communication relié à une antenne de type UWB, l'élément faisant office de proxy étant en contact avec des contacts électriques du terminal et comprenant des moyens de communication courte distance avec l'élément de communication, cet élément de communication étant logé dans une carte extractible destinée à coopérer avec le terminal.

A l'aide d'un tel système, une communication sans fil peut être établie entre d'une part un terminal standard, auquel on n'aurait qu'à ajouter un élément flexible de type eGo, une coque de type eGo ou une carte, par exemple de type SD ou micro-SD de type eGo, et d'autre part un élément de type eGo porté par l'utilisateur, cet élément coopérant avec un élément sécurisé, de type e-UICC de préférence.

L'élément de type eGo porté par l'utilisateur peut notamment être fixé à son poignet, par exemple à un bracelet-montre ou inséré dans une bague portée à un doigt de l'utilisateur. L'élément de type eGo peut ainsi être fermement solidaire du poignet de l'utilisateur, sans être fixé de manière lâche à l'utilisateur, ce qui serait le cas par exemple s'il était fixé à une gourmette, un collier ou un badge.

La présente invention propose dans un premier temps d'apporter une solution au problème suivant :
Si une personne mal intentionnée (ou par inadvertance), qui ne porte pas de dispositif de type eGo, touche avec un terminal portable compatible eGo, par exemple un téléphone mobile, un porteur d'un élément de type eGo (comprenant ou coopérant avec un élément sécurisé de type e-UICC), elle établit une communication de type BCC entre le terminal et le porteur de l'élément de type eGo par ce simple contact physique. Un appairage involontaire de la part du porteur des éléments eGo/e-UICC est ainsi réalisé. Le terminal et l'e-UICC entrent alors en communication en mode UWB sans que le porteur de l'e-UICC n'en ait connaissance. La personne mal intentionnée peut alors utiliser le terminal pour établir une communication avec le réseau de télécommunications, avec les identifiants du porteur de l'e-UICC. C'est donc le porteur de l'e-UICC portant le dispositif de type eGo qui va être facturé de la communication passée par la personne mal intentionnée. La solution à ce problème, qui consiste à éviter qu'un terminal de télécommunications compatible eGo touchant physiquement le détenteur d'un e-UICC relié à un dispositif de type eGo ne puisse s'appairer avec le dispositif de type eGo est précisément un des objets de la présente invention.

Dans un deuxième système d'appairage selon l'invention, on se propose d'appairer par exemple une souris reliée à un ordinateur et élément sécurisé déporté de type eGo, lui aussi porté au poignet ou au doigt de l'utilisateur.

Il est ici proposé d'appairer l'ordinateur (via sa souris) à l'élément sécurisé déporté. Dans l'état de la technique, afin de donner accès à un ordinateur à un utilisateur, celui-ci doit entrer un mot de passe. Le deuxième système d'appairage selon l'invention permet d'éviter l'entrée d'un tel mot de passe.

Dans un troisième système d'appairage selon l'invention, on se propose de vérifier le consentement d'un porteur d'un élément de type eGo à une transaction, par exemple une transaction bancaire : dans l'état de la technique, ce consentement est basé sur l'entrée d'un code sur un terminal de paiement, après y avoir inséré la carte bancaire de l'utilisateur.

A cet effet, la présente invention propose un système d'appairage entre un terminal et un élément de type eGo porté au poignet ou à la main d'un utilisateur, l'élément de type eGo comportant un élément de sécurité destiné à communiquer avec le terminal. Selon l'invention :
- l'élément de type eGo renferme un accéléromètre ;
- le terminal comprend des moyens d'enregistrement des mouvements effectués par l'élément de type eGo ;
- le système comporte des moyens de comparaison de la signature de l'accéléromètre et de celles des moyens d'enregistrement du terminal pour autoriser l'appairage du terminal avec l'élément de sécurité si les signatures sont semblables.

Dans un mode de réalisation préférentiel, le terminal est un terminal mobile acceptant la technologie eGo.

Avantageusement, le terminal mobile communique avec l'élément de sécurité et l'élément de sécurité supporte des fonctions de type UICC.

Selon un mode de réalisation, le terminal est une souris d'ordinateur reliée à un ordinateur et l'ordinateur comporte des moyens pour enregistrer les mouvements effectués par la souris d'ordinateur et l'élément de type eGo.

Dans un autre mode de réalisation, le terminal est une table ou tablette comprenant des moyens optiques ou tactiles d'enregistrement des mouvements effectués par l'élément de type eGo.

Préférentiellement, l'élément de type eGo est solidaire du bracelet-montre ou d'une bague de l'utilisateur.

Avantageusement, les moyens de comparaison de la signature de l'accéléromètre et de celles des moyens d'enregistrement pour autoriser l'appairage du terminal avec l'élément de sécurité si les signatures sont semblables sont compris dans l'élément de type eGo.

L'invention concerne également un procédé d'appairage entre un terminal et un élément de type eGo porté au poignet ou à la main d'un utilisateur, l'élément de type eGo comportant un élément de sécurité destiné à communiquer avec le terminal. Selon ce procédé :
- l'élément de type eGo renferme un accéléromètre ;
- le terminal comprend des moyens d'enregistrement des mouvements effectués par l'élément de type eGo ;
- le procédé consistant à comparer la signature de l'accéléromètre et de celles des moyens d'enregistrement pour autoriser l'appairage du terminal avec l'élément de sécurité si les signatures sont semblables.

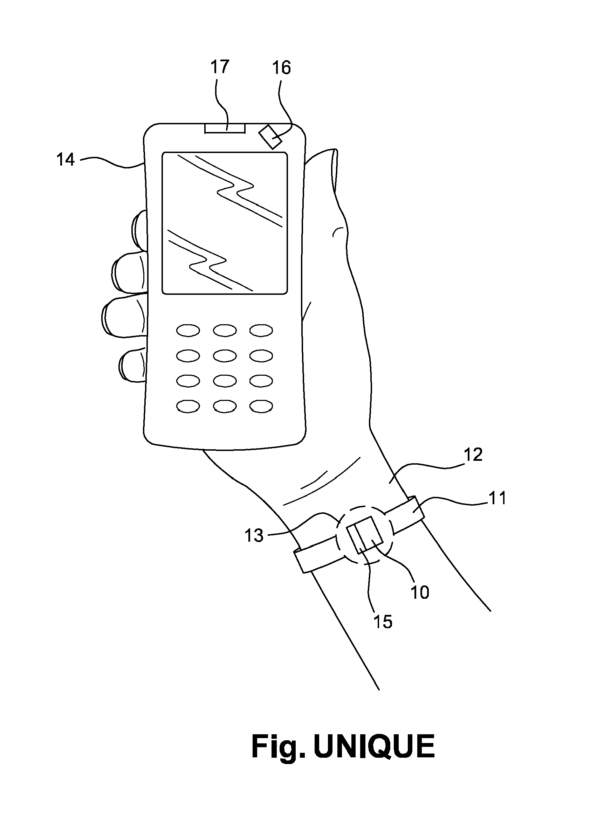

D'autres caractéristiques et avantages de la présente invention apparaîtront à la lecture de la description suivante de plusieurs modes de réalisation du système selon l'invention, donnés à titre illustratif et non limitatif, et de la figure unique annexée représentant un système d'appairage entre un terminal mobile de type eGo et un élément de type eGo porté au poignet d'un utilisateur.

Sur la figure unique, un élément de type eGo 10 est porté, à l'aide d'un bracelet 11, au poignet 12 d'un utilisateur. Le dispositif de type eGo 10 est par exemple intégré dans une montre ou placée dans un logement prévu sous cette montre 13. L'élément de type eGo 10 est en contact physique avec le poignet 12 de l'utilisateur et coopère avec un élément de sécurité destiné à communiquer avec un terminal, ici un terminal mobile 14. L'élément de sécurité est typiquement une puce remplissant la fonction d'un UICC, et sera appelé par la suite e-UICC. Ainsi, le terminal 14 ne comporte pas lui-même d'UICC ou d'e-UICC, mais celle-ci est déportée dans le dispositif eGo 10.

Le dispositif eGo 10 peut également être intégré dans une bague portée par l'un des doigts de l'utilisateur.

Il est connu que les éléments de type eGo doivent disposer de plusieurs antennes, notamment celle permettant la communication en mode UWB. Cette ou ces antennes peuvent être intégrées dans le bracelet 11.

Selon l'invention, afin de réaliser un appairage entre l'élément eGo 10 et le terminal 14, qui est compatible eGo, c'est-à-dire qui accepte la technologie eGo pour communiquer, comprend notamment des moyens de communication UWB avec l'élément 10, l'élément eGo 10 coopère ou renferme un accéléromètre 15, de même que le terminal 14 est doté d'un accéléromètre 16. Ce dernier est par exemple placé à proximité de l'écouteur 17 du terminal 14.

Chaque accéléromètre 15 et 16 est associé avec des moyens (non représentés) permettant de détecter et d'enregistrer les mouvements auxquels ils ont été soumis (une rotation, un mouvement de va et vient horizontal ou vertical, la signature manuelle de l'utilisateur,...). Ces enregistrements sont par la suite appelés des signatures. Les accéléromètres sont de préférence placés de telle sorte que leurs signatures sont identiques ou très similaires lorsque l'utilisateur tient fermement le terminal 14 en main et qu'il effectue un geste quelconque. Les signatures ne peuvent pas être identiques, au mieux elles sont proches, car leurs amplitudes seront différentes et l'on peut être amené à observer, dans certains cas de figure, des mouvements parasites de la main que l'on n'aurait pas dans le poignet. Un enregistrement des composantes principales des mouvements effectués est suffisant, tout dépend du niveau de sécurité attendu pour permettre l'appairage.

Selon l'invention, un moyen de comparaison (non représenté) des signatures des accéléromètres est prévu dans l'élément de type eGo ou dans le terminal mobile 14.

Ce moyen de comparaison compare les signatures des accéléromètres 15 et 16 pendant ou après la communication BCC ou lors de la communication UWB mentionnées précédemment. Pour ce faire, une transmission via BCC ou UWB de la signature de l'accéléromètre compris dans le terminal 14 est soit transmise au moyen de comparaison si celui-ci est compris dans l'élément eGo 10, soit celle comprise dans l'élément eGo 10 est transmise au moyen de comparaison si celui-ci est compris dans le terminal 14.

Le moyen de comparaison compare les deux signatures. Si celles-ci sont semblables (une valeur de ressemblance de l'ordre de 90% est correcte pour autoriser un appairage entre le terminal mobile 14 de type eGo et l'élément de type eGo 10 porté au poignet 12 de l'utilisateur), le moyen de comparaison autorise l'appairage entre le terminal 14 et l'e-UICC compris dans l'élément 10. Une communication peut alors être passée par l'utilisateur. Au contraire, si les signatures ne sont pas suffisamment semblables, cet appairage ne sera pas autorisé et le terminal 14 ne pourra pas fonctionner. Ce système permet donc d'éviter qu'une personne mal intentionnée disposant du terminal 14 et non munie d'un élément (de type bracelet ou montre) de type eGo ne puisse appairer son terminal 14 avec l'e-UICC 10, car elle n'aura pas effectué la gestuelle du porteur de l'élément 10 avec le terminal 14 en main.

Il est bien entendu largement préférentiel que l'élément 10 et l'accéléromètre 15 soient tenus dans la main tenant le terminal 14, afin d'augmenter le taux de réussite d'appairage. Un élément 10 porté à la ceinture ou au bout d'un badge ne pourra pas s'appairer avec le terminal 14.

Les moyens de comparaison des signatures des accéléromètres sont préférentiellement compris dans l'élément 10 afin d'éviter qu'un terminal modifié de manière malveillante n'autorise l'appairage même si celui-ci n'aurait pas dû être autorisé (un moyen de comparaison autorisant systématiquement l'appairage dès que le porteur du l'élément eGo 10 est touché par le terminal - en référence à une carte bancaire de type « oui-oui »).

Dans un second mode de réalisation du système selon l'invention, le terminal est une souris d'ordinateur reliée à un ordinateur. La souris renferme un accéléromètre ou un détecteur de mouvement (par exemple optique) et transmet la signature enregistrée par l'utilisateur de la souris à l'ordinateur. Ce dernier comporte des moyens pour enregistrer les mouvements effectués par la souris. En parallèle, l'élément de type eGo porté par l'utilisateur comportant un accéléromètre enregistre les mouvements effectués par cet élément. La signature des mouvements effectués par la souris est transmise à l'élément de type eGo et, en cas de fortes ressemblances des signatures, l'utilisateur est identifié comme étant autorisé à accéder à l'ordinateur, par exemple sans avoir à entrer son mot de passe. L'élément de sécurité embarqué dans le dispositif de type eGo n'embarque dans ce cas pas d'e-UICC mais se contente de comparer les deux signatures. Ceci permet d'empêcher qu'une personne mal intentionnée touche un porteur d'un élément de type eGo avec la souris de l'ordinateur pour avoir accès à ce dernier : seul le porteur de l'élément eGo est autorisé à y accéder car c'est lui qui aura effectué la gestuelle qui sera comparée avec celle enregistrée par la souris et transmise à l'ordinateur. La souris peut elle-même comprendre les moyens d'enregistrement des mouvements auxquelles elle est soumise et les retransmettre à l'élément eGo porté par l'utilisateur, mais ceci augmente le prix de la souris alors qu'un simple logiciel installé au niveau de l'ordinateur est capable de réaliser ces fonctions (enregistrement et transmission).

Dans un troisième mode de réalisation du système selon l'invention, le terminal est une table ou tablette tactile telle qu'une table dite SURFACE 2.0 par exemple décrite sur le site http://www.clubic.com/salon-informatique-tic/ces/actualite-389144-surface-2-retour-table-tactile-microsoft.html. Il peut également s'agir d'un pavé d'ordinateur faisant office de souris.

Une table SURFACE 2.0 fait appel à une technologie appelée « Pixel Sense » avec laquelle des caméras infra-rouges sont situées sous une dalle transparente (par exemple une vitre) sur laquelle les utilisateurs peuvent à l'aide de leurs mains faire défiler des applications, accéder à des sites Web, de la même manière qu'un utilisateur d'un terminal mobile utiliserait les fonctions tactiles de son terminal. Chaque pixel de la table devient une caméra et l'ensemble des pixels parcourus par la main de l'utilisateur permet ainsi de générer également une signature telle que décrite précédemment. Il est ainsi possible de réaliser un appairage entre un élément de type eGo porté au poignet d'un utilisateur et la table tactile.

En comparant les signatures de la table tactile et celle de l'accéléromètre compris dans l'élément de type eGo porté au poignet d'un utilisateur, il est ainsi possible de vérifier la volonté explicite (le consentement) de l'utilisateur d'utiliser son élément de sécurité avec la table tactile, par exemple pour des applications de paiement. Après appairage, un paiement peut être autorisé, par exemple par NFC.

Dans un commerce, la signature manuelle ou tout autre geste de l'utilisateur effectué à l'aide de son élément de type eGo porté à son poignet sur une tablette tactile permet ainsi par exemple d'établir une connexion UWB entre la table reliée à un terminal de paiement (ou directement avec le terminal de paiement) et l'élément de sécurité associé au dispositif eGo porté par l'utilisateur. Cette connexion UWB permet ainsi par exemple d'effectuer un paiement auprès du commerçant si l'élément de sécurité comporte une application bancaire.

L'invention concerne également un procédé d'appairage entre un terminal et un élément de type eGo porté au poignet ou à la main d'un utilisateur, l'élément de type eGo comportant un élément de sécurité destiné à communiquer avec le terminal. Dans ce procédé :
- l'élément de type eGo renferme un accéléromètre ;
- le terminal comprend des moyens d'enregistrement des mouvements effectués par l'élément de type eGo ;
- le procédé consiste à comparer la signature de l'accéléromètre et de celles des moyens d'enregistrement pour autoriser l'appairage du terminal avec l'élément de sécurité si les signatures sont semblables.

## Revendications

1. Système d'appairage entre un terminal (14) et un élément de type eGo (10) porté au poignet (12) ou à la main d'un utilisateur, ledit élément de type eGo (10) comportant un élément de sécurité destiné à communiquer avec ledit terminal (14), **caractérisé en ce que** :
- ledit élément de type eGo (10) renferme un accéléromètre (15, 16) ;
- ledit terminal comprend des moyens d'enregistrement des mouvements effectués par ledit élément de type eGo ;
- ledit système comporte des moyens de comparaison de la signature dudit accéléromètre (15, 16) et de celles desdits moyens d'enregistrement dudit terminal pour autoriser l'appairage dudit terminal (14) avec ledit élément de sécurité si lesdites signatures sont semblables.

2. Système selon la revendication 1, **caractérisé en ce que** ledit terminal est un terminal mobile acceptant la technologie eGo.

3. Système selon la revendication 2, **caractérisé en ce que** ledit terminal mobile communique avec ledit élément de sécurité et **en ce que** ledit élément de sécurité supporte des fonctions de type UICC.

4. Système selon la revendication 1, **caractérisé en ce que** ledit terminal est une souris d'ordinateur reliée à un ordinateur et **en ce que** ledit ordinateur comporte des moyens pour enregistrer lesdits mouvements effectués par ladite souris d'ordinateur et ledit élément de type eGo.

5. Système selon la revendication 1, **caractérisé en ce que** ledit terminal est une table ou tablette comprenant des moyens optiques ou tactiles d'enregistrement des mouvements effectués par ledit élément de type eGo.

6. Système selon la revendication 1, **caractérisé en ce que** ledit élément de type eGo (10) est solidaire du bracelet-montre (11) ou d'une bague dudit utilisateur.

7. Système selon l'une des revendications 1 à 6, **caractérisé en ce que** lesdits moyens de comparaison de la signature dudit accéléromètre (15, 16) et de celles desdits moyens d'enregistrement pour autoriser l'appairage dudit terminal (14) avec ledit élément de sécurité si lesdites signatures sont semblables sont compris dans ledit élément de type eGo.

8. Procédé d'appairage entre un terminal (14) et un élément de type eGo (10) porté au poignet (12) ou à la main d'un utilisateur, ledit élément de type eGo (10) comportant un élément de sécurité destiné à communiquer avec ledit terminal (14), **caractérisé en ce que** :
- ledit élément de type eGo (10) renferme un accéléromètre (15, 16) ;
- ledit terminal comprend des moyens d'enregistrement des mouvements effectués par ledit élément de type eGo ;
- ledit procédé consistant à comparer la signature dudit accéléromètre (15, 16) et de celles desdits moyens d'enregistrement pour autoriser l'appairage dudit terminal (14) avec ledit élément de sécurité si lesdites signatures sont semblables.
